# EUROPÄISCHE PATENTSCHRIFT

(11) **EP 2 705 744 B1**
(45) Veröffentlichungstag und Bekanntmachung des Hinweises auf die Patenterteilung: **19.04.2017**
(21) Anmeldenummer: 13182658.8
(22) Anmeldetag: 02.09.2013
(51) Int. Cl.: A01D 78/10

(54) **Heuwerbungsmaschine**
Hay baler
Faneuse

(30) Priorität: 07.09.2012 DE 102012108364
(43) Veröffentlichungstag der Anmeldung: 12.03.2014
(73) Patentinhaber: CLAAS Saulgau GmbH, 88348 Bad Saulgau (DE)
(72) Erfinder: Geng, Manfred, 88348 Bad Saulgau (DE)

(56) Entgegenhaltungen:
- EP-A1- 2 436 252
- EP-A2- 1 013 159
- WO-A1-2010/074558
- DE-A1-102006 014 652

## Beschreibung

Die Erfindung betrifft eine Heuwerbungsmaschine, insbesondere einen Kreiselschwader, gemäß dem Oberbegriff des unabhängigen Anspruchs 1 (siehe EP-A-1013159).

### Stand der Technik

Heuwerbungsmaschinen mit Rechkreiseln sind bekannt als Kreiselschwader und Kreiselwender. Kreiselschwader nehmen das stängelige, am Boden liegende Erntegut in der Fläche auf und bilden daraus Schwade, die von nachfolgenden Erntemaschinen mit einer Pick up aufgesammelt werden können. Kreiselwender nehmen das stängelige am Boden liegende Erntegut auf und wenden es für den weiteren Trocknungsprozess.
Kreiselschwader mit gesteuerten Zinkenarmen verfügen über mit Rechzinken bestückte Zinkenarme, die in bekannter Weise von Kurvenbahnen gesteuert werden und die von einem Fahrwerk, bestehend aus Tast- und Stützrädern, bodenkopierend am Boden abgestützt werden. Bekannt sind Mehrkreiselschwader als Seiten- oder Mittenableger. Damit die Rechkreisel dem Horizont des Bodens, insbesondere in kuppiertem Gelände mit Kuppen und Senken, besser folgen können, werden diese kardanisch mit dem Maschinengestell des Kreiselschwaders so verbunden, dass diese Roll- und Nickbewegungen unabhängig vom Maschinengestell ausführen können. Dabei sind die Rechkreisel mit eigenen Tast- und Stützrädern ausgestattet und am Boden abgestützt, so dass diese bodenkopierend dem Geländeverlauf folgen können.

Bedingt durch die Fahrbewegung und die Bodenkontur wirken Vertikalbeschleunigungen und Winkelbeschleunigungen auf die Rechkreisel ein, so dass diesen langwellige aber auch kurzwellige Schwingbewegungen aufgezwungen werden, wodurch die Rechkreisel Vertikal-, Roll- und Nickbewegungen ausgesetzt sind. Damit die Rechkreisel diese Bewegungen quasi unabhängig vom Fahrgestell des Kreiselschwaders ausführen können, sind sie an Auslegerarmen, die wiederum in Klappgelenken um etwa in Fahrtrichtung weisende Gelenkachsen schwenkbar gehaltert sind, an dem Fahrgestell angelenkt. Dabei sind die Rechkreisel am freien Ende der Auslegerarme kardanisch aufgehängt. Bei Seiten- und Mittelschwadern sind die Rechkreisel an klappbaren Auslegern angelenkt und diese wiederum sind in Klappgelenken mit einem Fahrgestell verbunden. Dabei werden die Rechkreisel zur Überführung in ihre Vorgewende- oder Transportstellung durch Verklappen der Ausleger aus ihrer bodennahen in ihre bodenferne Transportstellung hochgeklappt.

Es sind weiterhin Lösungen bekannt, bei denen die Auslegerarme zwischen der Klappachse und dem Rechkreisel ein weiteres Klappgelenk aufweisen, wobei die in Fahrtrichtung weisende Klappachse und die Klappachse des weiteren Klappgelenks etwa rechtwinkelig zueinander verlaufen, so dass die Rechkreisel um die weitere Klappachse des weiteren Klappgelenks um etwa 90° verklappt werden können, wodurch sich die Transporthöhe ebenfalls reduzieren lässt. Dieser erweiterte Klappmechanismus ist so ausgestaltet, dass die Gelenkachse des weiteren Klappgelenks in der Arbeitsstellung vertikal und damit senkrecht zum Boden verläuft. Dadurch kann dieser Klappmechanismus auch dazu verwendet werden, die Arbeitsbreite eines derartigen Kreiselschwaders zu verändern.

Es sind weiterhin Lösungsformen bekannt, bei denen die Rechkreisel an teleskopierbaren Auslegerarmen angelenkt sind und bei denen die Verschiebungen durch den Längenveränderungsmechanismus genutzt werden, um einerseits die Transporthöhe zu reduzieren und um andererseits auch die Arbeitsbreite verändern zu können. Auch sind Mischformen bekannt, die die verschiedenen zuvor genannten Ausführungsarten miteinander kombinieren.

Allen Ausführungsformen gemeinsam ist, dass, wenn bereits abgelegte Schwade überfahren werden müssen, die Forderung besteht, die Rechkreisel soweit vom Boden abheben zu können, dass die bereits geformten Schwade nicht wieder von den rotierenden Rechkreiseln erfasst und zerstört werden können. Diese Situation ist besonders am Vorgewende gegeben.

Um dieses Zerstören der Schwade zu vermeiden werden die Rechkreisel soweit vom Boden abgehoben, dass die Zinken gerade noch nicht das Erntegut berühren können. Diese Stellung der Rechkreisel liegt zwischen der Arbeitsstellung der Rechkreisel am Boden und in einer Zwischenposition der bodenfernen angehobenen Stellung, aber noch deutlich unterhalb der Position der Transportstellung der Rechkreisel. Hinzu kommt, dass bei Wendemanövern, gerade bei Heuwerbungsmaschinen mit großen Arbeitsbreiten, rückwärts gefahren werden muss. Aber auch dann existiert das Problem, dass die bereits abgelegten Schwaden beim Rückwärtsfahren nicht zerstört werden sollen. Soll dieses vermieden werden, so muss der Fahrer manuell gesteuert mit entsprechenden Steuerbefehlen die Rechkreisel vom Boden abheben und diese in eine vom Boden hinreichend angehobene Stellung überführen oder diese ggf. sogar vorübergehend in eine Transportstellung überführen, damit bei besonders großen Arbeitsbreiten in beengten Räumen entsprechende Wendemanöver überhaupt durchgeführt werden können.

### Aufgabenstellung

Hier setzt die Erfindung an, mit dem Ziel, eine Heuwerbungsmaschine vorzuschlagen, die sicherstellt, dass durch Wendemanöver, verbunden mit Rückwärtsfahrten, durch die Rechkreisel bereits abgelegte und geformte Schwade nicht wieder zerstört werden.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Die Erfindung betrifft eine Heuwerbungsmaschine mit wenigstens zwei um aufrechte Kreiselachsen umlaufend angetriebenen Rechkreiseln, welche Zinkenarme aufweisende Rechzinken aufnehmen, wobei die Rechkreisel mit Tast-und Stützrädern in ihrer Arbeitsstellung am Boden abstützbar sind und die Rechkreisel an einem Maschinengestell mittels Auslegerarmen um etwa horizontal verlaufende Achsen von Klappgelenken, an diesen angelenkt mittels hydraulischer Stellantriebe, von einer bodennahen Arbeitsposition in eine bodenfernere Vorgewende- oder Transportposition und umgekehrt überführbar sind. Dabei weist das Maschinengestell ein Fahrwerk mit wenigstens zwei Stützrädern auf, welches einen Großteil des Gewichts der Heuwerbungsmaschine am Boden abstützt.

Erfindungsgemäß weist die Heuwerbungsmaschine eine Steuerung auf, die automatisch abhängig von der eingeleiteten Rückwärtsfahrt die Rechkreisel in eine bodenferne entweder Vorgewende- oder Transportposition überführt. Der dazu erforderliche Steuerbefehl wird automatisch durch die eingeleitete beabsichtigte Fahrtrichtung, nämlich die Rückwärtsfahrt, generiert.

Dazu sieht die Erfindung vor, dass die Heuwerbungsmaschine eine geräteseitige Steuereinheit aufweist, welche über einen Eingangskanal ein von der Rückwärtsfahrt des Traktors oder der Heuwerbungsmaschine abhängig generiertes Eingangssignal aufnehmen und verarbeiten kann, wobei dieses Eingangssignal über eine logische Verknüpfung innerhalb der Steuereinheit einen Steuerbefehl für wenigstens einen Aktor auslöst, welcher die Rechkreisel von einer bodennahen Arbeitsposition in eine bodenferne Vorgewende- oder Transportposition überführt.

Weiterhin sieht die Erfindung vor, dass die geräteseitige Steuereinheit einen Mikroprozessor aufweist, der auch ein Jobrechner sein kann und der einen Datenbus aufweist, der vorteilhafterweise mit dem traktorenseitigen Steuerungssystem korrespondiert.

Der wenigstens eine anzusteuernde Aktor ist als hydraulisches Wegeventil ausgebildet, welches die hydraulischen Stellantriebe des Rechkreiselaushubs zur Überführung der Rechkreisel von einer bodennahen Arbeitsposition in eine bodenfernere Vorgewende- oder Transportposition betätigt.

Ebenso kann durch den Start der Rückwärtsfahrt traktorseitig das Eingangssignal generiert werden, welches als Eingangssignal für die geräteseitige Steuereinheit genutzt wird und wodurch das Ausgangssignal zur Ansteuerung des Aktors erzeugt wird.

Aber ebenfalls sieht die Erfindung vor, dass durch den Start der Rückwärtsfahrt das Eingangssignal geräteseitig generiert wird, welches als Ausgangssignal zur Ansteuerung des Aktors genutzt wird. Dazu weist die Heuwerbungsmaschine wenigstens einen Sensor auf, welcher abhängig von der Fahrtrichtung Vorwärts-oder Rückwärtsfahrt, unterschiedliche Ausgangssignale als Eingangssignale für die Steuereinheit generiert. In besonders vorteilhafter Weise, weil kostengünstig, ist der wenigstens eine Sensor drehrichtungsabhängig vom Stützrad des Fahrwerks so ausgebildet, dass er zugleich drehrichtungsabhängig unterschiedliche Ausgangssignale als Eingangssignale für die Steuereinheit generieren kann. Dazu kann der drehrichtungsabhängige Sensor wenigstens zwei Initiatoren umfassen, die zeitlich versetzt zueinander Eingangssignale für das Steuerungssystem generieren. Damit kann die Reihenfolge der zeitlich zueinander versetzten Ausgangssignale genutzt werden, um die Drehrichtung eines Stützrads des Maschinengestells zu erfassen, um damit vorwärts- oder rückwärtsfahrtabhängig, zeitlich versetzt zueinander Eingangssignale für das Steuerungssystem zu generieren

Vorteilhafter Weise wird das so generierte Eingangssignal zur Erkennung der Rückwärtsfahrt genutzt, um der Steuereinheit den Betriebsmodus Rückwärtsfahrt zuzuordnen, um die Rechkreisel in eine verriegelte Selbsthaltung als bodenferne Vorgewende- oder Transportstellung zu überführen und um diese aus sicherheitstechnischen Gründen solange in der verriegelten Selbsthaltung zu halten, bis ein anderes Steuersignal den Betriebsmodus Rückwärtsfahrt wieder aufhebt. Erfindungsgemäß ist daher vorgesehen, dass der Betriebsmodus Rückwärtsfahrt durch ein vom Fahrer des Traktors manuell ausgelöstes Signal vom Führerstand des Traktors aus aufgehoben werden kann, wodurch die Steuereinheit in den Betriebsmodus Normalbetrieb zurückgesetzt wird. Erfindungsgemäß ist es aber ebenso möglich, dass der Betriebsmodus Rückwärtsfahrt durch eine sich anschließende Vorwärtsfahrt automatisch in den Betriebsmodus Normalbetrieb zurückgesetzt wird.

### Ausführungsbeispiel

Nähere Einzelheiten der Erfindung sind den nachfolgenden Figurendarstellungen und deren Beschreibungen zu entnehmen. Es zeigen:
- Fig.1: zeigt eine Heuwerbungsmaschine in einer Draufsicht in Arbeitsstellung.
- Fig.2: zeigt die Heuwerbungsmaschine gemäß Fig.1 in einer Vorgewendestellung.
- Fig.3: zeigt die Heuwerbungsmaschine gemäß Fig.1 in einer Transportstellung.
- Fig.4: zeigt einen symbolischen Schaltplan für eine Steuerung am Beispiel der Heuwerbungsmaschine gemäß Fig.1
- Fig.5: zeigt den Schaltplan für eine Steuerung der Heuwerbungsmaschine nach der Erfindung am Beispiel der Heuwerbungsmaschine gemäß Fig.4

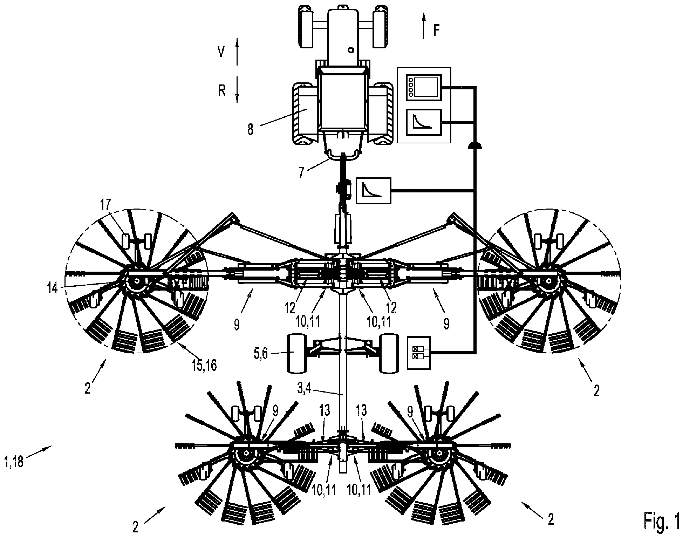

In Fig. 1 ist eine Heuwerbungsmaschine 1 am Beispiel eines Kreiselschwaders in einer Draufsicht in Arbeitsstellung 18 dargestellt. Diese ist an einem Traktor 8 angehängt bzw. aufgesattelt. Die Heuwerbungsmaschine 1 ist ausgebildet als Vierkreiselschwader mit mittiger Schwadablage. Die Heuwerbungsmaschine 1 besteht im Wesentlichen aus vier Rechkreiseln 2 mit deren Rechzinken 16 aufnehmenden Zinkenarmen 15, einem Maschinengestell 3, ausgebildet als deichselbildender Längsholm 4 mit einem Fahrgestell 5 und dessen Stützrädern 6. Die um Hochachsen von Kreiselachsen 14 umlaufend angetriebenen Rechkreisel 2 stützen sich in der Arbeitsstellung 18 mittels Tast- und Stützrädern 17 am Boden ab. Am vorderen Ende des Längsholms 4 ist in einem Hochgelenk die Kupplungseinrichtung 7 an diesem angelenkt. Die Kupplungseinrichtung 7 wiederum wird von den Unterlenkerzapfen des Heckhubwerks des Traktors 8 aufgenommen. Die Rechkreisel 2 sind an Auslegerarmen 9 in Klappgelenken 10 um etwa in Fahrtrichtung F weisende Gelenkachsen 11 an dem Längsholm 4 des Maschinengestells 3 angelenkt. Die Auslegerarme 9, und damit die Rechkreisel 2, können um die Gelenkachsen 11 von der bodennahen Arbeitsstellung 18 in eine bodenferne Vorgewende- 19 oder Transportstellung 20 mittels hydraulischer Stellantriebe 12,13, ausgebildet als Hydraulikzylinder, hochgeklappt werden. Der Fahrtrichtungspfeil Vorwärtsfahrt V definiert die Bewegungsrichtung während der Vorwärtsfahrt und der Fahrtrichtungspfeil Rückwärtsfahrt R definiert die Bewegungsrichtung während der Rückwärtsfahrt.

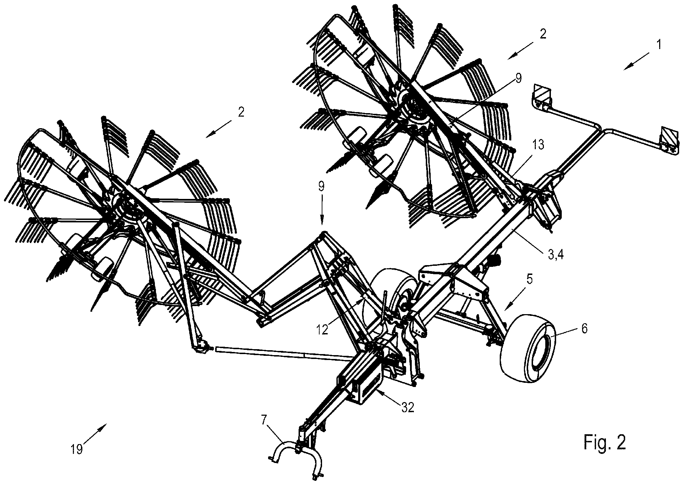

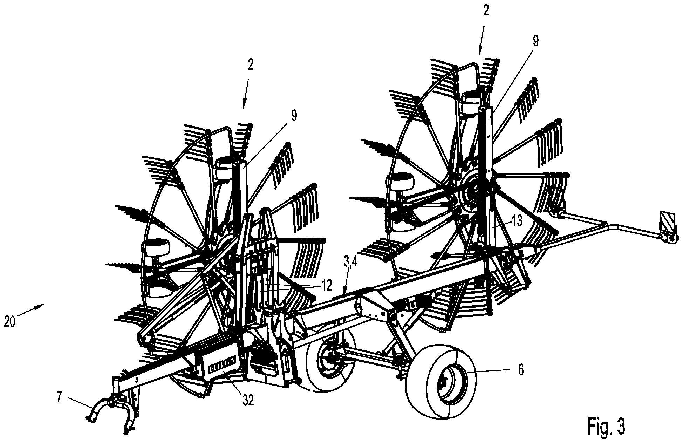

In Fig. 2 ist die Heuwerbungsmaschine gemäß der Fig. 1 mit vom Boden angehobenen Rechkreiseln 2 in einer Vorgewendestellung 19 und in Fig. 3 ist die Heuwerbungsmaschine gemäß der Fig. 1 mit vom Boden angehobenen Rechkreiseln 2 in einer Transportstellung 20 dargestellt. Aus Gründen der Übersichtlichkeit sind in den Darstellungen der Figuren Fig. 2 und Fig. 3 die Rechkreisel und deren Ausleger im vorderen Bereich der perspektivischen Darstellung nicht mit dargestellt.

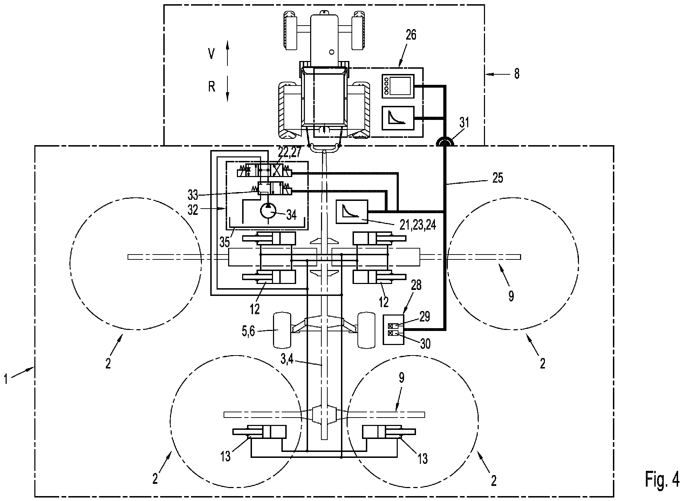

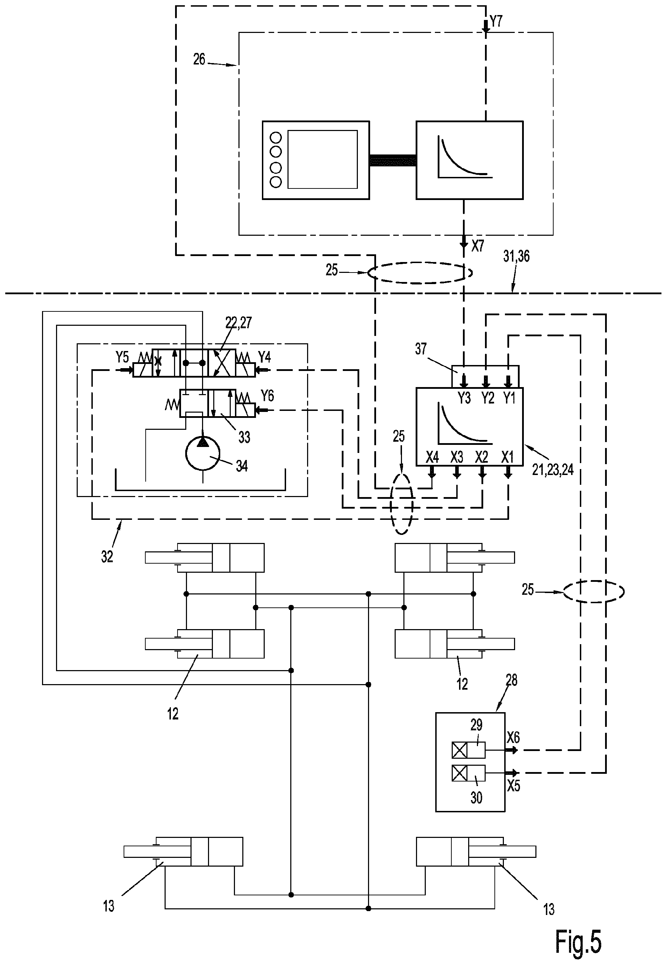

Fig.4 zeigt einen symbolischen Schaltplan für eine Steuerung am Beispiel der Heuwerbungsmaschine 1 gemäß Fig. 1. Die Heuwerbungsmaschine 1 umfasst eine geräteseitige Steuereinheit 21, welche über einen Eingangskanal 37, wie in Fig. 5 dargestellt, ein von der Rückwärtsfahrt R des Traktors 8 und/oder der Heuwerbungsmaschine 1 abhängig generiertes Eingangssignal aufnehmen und verarbeiten kann. Dieses Eingangssignal wird entweder vom traktorseitigen Steuerungssystem 26, beispielsweise durch Einlegen des Rückwärtsgangs, und/oder vom Fahrtrichtungssensor 28 zu Beginn der Rückwärtsfahrt R generiert. Das traktorseitige Steuerungssystem 26 weist einen Mikroprozessor 23 auf, der dieses Eingangssignal aufnimmt. Der Mikroprozessor 23 umfasst weiterhin einen Datenbus 25, der zugleich einen Steuer- und Feldbus umfasst und der somit ein komplettes Bussystem 25 definiert, welches mit den peripheren Geräten in Verbindung steht und kommuniziert. Die peripheren Geräte umfassen zumindest den Fahrtrichtungssensor 28 und einen Aktor 22, ausgebildet als hydraulisches Wegeventil 27. Der geräteseitige Jobrechner 24, welcher den Mikroprozessor 23 und den Steuerbus als Teil des Bussystems 25 umfasst, kann über das Bussystem 25 und eine Schnittstelle zum Traktor 8, ausgebildet als Bus-Steckkupplung 31, auch mit dem traktorseitigen Steuersystem 26 kommunizieren. Somit kann zu den peripheren Geräten zusätzlich auch das traktorseitige Steuersystem 26 gehören. Der Fahrtrichtungssensor 28 kann abhängig von der Fahrtrichtung Vorwärtsfahrt V oder Rückwärtsfahrt R unterschiedliche Ausgangssignale als Eingangssignale für die geräteseitige Steuereinheit 21 generieren.

Das zuvor angesprochene Eingangssignal kann dann über das Bussystem über eine logische Verknüpfung innerhalb der geräteseitigen Steuereinheit 21 dahingehend verarbeitet werden, dass ein Steuerbefehl als Ausgangssignal des Jobrechners 24 ebenfalls über das Bussystem wenigstens einem Aktor 22 zugeführt wird, welcher einen Teil des geräteseitigen Hydrauliksystems darstellt. Das geräteseitige Hydrauliksystem umfasst ein Hydroaggregat 32, ein Vorsteuerventil 33, eine Konstantpumpe 34, einen Tank für Hydrauliköl 35 und ein Wegeventil 27. Dieser Steuerbefehl bewirkt, dass die Rechkreisel 2 durch Betätigung der Hydraulikzylinder 12,13 von einer bodennahen Arbeitsstellung 18 in eine bodenferne Vorgewendestellung 19 oder Transportstellung 20 überführt werden.

In einer besonders einfachen Ausgestaltung des Fahrtrichtungssensors 28 kann dieser drehrichtungsabhängig vom Stützrad 6 des Fahrgestells 5 unterschiedliche Ausgangssignale generieren. Dazu weist dieser Fahrtrichtungssensor 28 wenigstens zwei Initiatoren 29,30 auf, die zeitlich versetzt zueinander Eingangssignale für die geräteseitige Steuereinheit 21 generieren. Die Initiatoren 29,30 können von einer an dem Stützrad 6 angebrachten und an der Umlaufbewegung des Stützrads 6 teilnehmenden Steuerfahne in Form von Wischersignalen angesteuert werden.

Die zeitlich zueinander versetzten Ausgangssignale der Initiatoren werden genutzt um die Drehrichtung eines Stützrads 6 des Fahrgestells 5 zu erfassen und um damit vorwärts- oder rückwärtsfahrtabhängig zeitlich zueinander versetzte Eingangssignale für die geräteseitige Steuereinheit 21 zu generieren, um dadurch beispielsweise unterschiedliche Betriebsmodi der geräteseitigen Steuerung für die Vorwärtsfahrt V oder die Rückwärtsfahrt R zu definieren.

Damit können die so generierten Eingangssignale zur Erkennung der Rückwärtsfahrt R die Steuereinheit in den Betriebsmodus Rückwärtsfahrt setzen. Innerhalb des Betriebsmodus Rückwärtsfahrt R können dann die Rechkreisel 2 in eine verriegelte Selbsthaltung als bodenferne Vorgewende- 19 oder Transportstellung 20 überführt werden.

Umgekehrt kann bei Einleitung der sich anschließenden Vorwärtsfahrt V der Betriebsmodus Rückwärtsfahrt R automatisch aufgehoben werden und - detektiert durch den Fahrtrichtungssensor 28 - nunmehr automatisch der Betriebsmodus in den Betriebsmodus Vorwärtsfahrt V zurückgesetzt werden. Alternativ kann der Betriebsmodus Rückwärtsfahrt R auch durch ein vom Fahrer des Traktors 8 manuell ausgelöstes Signal vom Führerstand des Traktors 8 aus aufgehoben werden, wodurch die geräteseitige Steuereinheit 21 in den Betriebsmodus Vorwärtsfahrt V zurückgesetzt wird.

Fig. 5 zeigt weitere Einzelheiten des Schaltplans für eine Steuerung der Heuwerbungsmaschine 1 nach der Erfindung am Beispiel der Heuwerbungsmaschine gemäß Fig. 4. Die Schnittstelle Heuwerbungsmaschine 1/ Traktor 36, ist durch eine Trennlinie dargestellt, welche zugleich die Bus-Steckkupplung 31 symbolisiert. Die geräteseitige Steuereinheit 21 ist als Jobrechner 24 mit einem Mikroprozessor 23 dargestellt. An dieser liegen die Eingänge Y1,Y2,Y3 und die Ausgänge X1,X2,X3,X4 an. Der Fahrtrichtungssensor 28 generiert die Ausgangssignale X4,X5, die an den Eingängen Y1,Y2 der geräteseitigen Steuereinheit 21 als Eingangssignale Y1,Y2 anliegen. Das traktorseitige Steuerungssystem 26 liegt mit seinem Ausgang X7 am Eingang Y3 der geräteseitigen Steuereinheit 21 an und ist mit diesem über den Eingangskanal 37 verbunden. Die Ausgänge X1,X2 liegen an dem Aktor 22 und damit am Wegeventil 27 als Eingänge Y4,Y5 an und der Ausgang X3 liegt am Eingang des Vorsteuerventils 33 an. Der Ausgang X4 stellt zugleich einen Eingang Y7 für das traktorseitige Steuerungssystem 26 dar. Dabei ist unterstellt, dass das traktorseitige Steuerungssystem 26 ebenfalls einen Mikroprozessor und ein Bussystem aufweist, so dass beide, dass traktorseitige Steuerungssystem 26 und die geräteseitige Steuereinheit 21 über den Datenbus 25 miteinander kommunizieren können. Über die Ausgänge X1,X2 steht die geräteseitige Steuerung 21 mit dem Aktor 22 bzw. Wegeventil 27 in einer Wirkverbindung zur Ansteuerung bzw. Betätigung der hydraulischen Stellantriebe, ausgebildet als Hydraulikzylinder 12,13. Der Ausgang X3 dient zur Ansteuerung des Vorsteuerventils 33.

Das hier dargelegte Ausführungsbeispiel stellt nur eine Variante von vielen denkbaren Steuerungen dar, die aber ausdrücklich ebenfalls in den Schutzbereich der Erfindung gemäß dem kennzeichnenden Teil des Hauptanspruchs hineinfallen können.

### Bezugszeichenliste

- 1: Heuwerbungsmaschine, Kreiselschwader
- 2: Rechkreisel
- 3: Maschinengestell
- 4: Längsholm
- 5: Fahrgestell
- 6: Stützrad
- 7: Kupplungseinrichtung
- 8: Traktor
- 9: Auslegerarm
- 10: Klappgelenk
- 11: Gelenkachse
- 12: Hydraulikzylinder
- 13: Hydraulikzylinder
- 14: Kreiselachse
- 15: Zinkenarm
- 16: Rechzinken
- 17: Tast- und Stützräder
- 18: Arbeitsstellung
- 19: Vorgewendestellung
- 20: Transportstellung
- 21: geräteseitige Steuereinheit
- 22: Aktor
- 23: Mikroprozessor
- 24: Jobrechner
- 25: Datenbus, Datenbussystem
- 26: traktorseitiges Steuerungssystem
- 27: Wegeventil
- 28: Fahrtrichtungssensor
- 29: Initiatoren
- 30: Initiatoren
- 31: Bus-Steckkupplung
- 32: Hydraulikaggregat
- 33: Vorsteuerventil
- 34: Konstantpumpe
- 35: Tank
- 36: Schnittstelle Heuwerbungsmaschine / Traktor
- 37: Eingangskanal
- F: Fahrtrichtung
- V: Vorwärtsfahrt
- R: Rückwärtsfahrt
- X1: Ausgang, Ausgangssignal
- X2: Ausgang, Ausgangssignal
- X3: Ausgang, Ausgangssignal
- X4: Ausgang, Ausgangssignal
- X5: Ausgang, Ausgangssignal
- X6: Ausgang, Ausgangssignal
- X7: Ausgang, Ausgangssignal
- Y1: Eingang, Ausgangssignal
- Y2: Eingang, Ausgangssignal
- Y3: Eingang, Ausgangssignal
- Y4: Eingang, Ausgangssignal
- Y5: Eingang, Ausgangssignal
- Y6: Eingang, Ausgangssignal
- Y7: Eingang, Ausgangssignal

## Patentansprüche

1. Heuwerbungsmaschine (1) mit wenigstens zwei um aufrechte Kreiselachsen (14) umlaufend angetriebene Rechkreisel (2), welche Zinkenarme (15) aufweisende Rechzinken (16) aufnehmen, wobei die Rechkreisel (2) mit Tast- und Stützrädern (17) in ihrer Arbeitsstellung (18) am Boden abstützbar sind, wobei die Rechkreisel (2) an einem Maschinengestell (3) mittels Auslegerarmen (9) um etwa horizontal verlaufende Achsen von Klappgelenken (10) an diesen angelenkt, mittels hydraulischer Stellantriebe (12, 13) von einer bodennahen Arbeitsstellung (18) in eine bodenfernere Vorgewendestellung (19) oder Transportstellung (20) und umgekehrt überführbar sind, wobei das Maschinengestell (3) ein Fahrgestell (5) mit wenigstens zwei Stützrädern (6) aufweist, **dadurch gekennzeichnet, dass** die Heuwerbungsmaschine (1) eine geräteseitige Steuereinheit (21) aufweist, welche über einen Eingangskanal (37) ein von der Rückwärtsfahrt (R) des Traktors (8) und/oder der Heuwerbungsmaschine (1) abhängig generiertes Eingangssignal (Y1,Y2,Y3) aufnehmen und verarbeiten kann, wobei das Eingangssignal (Y1,Y2,Y3) über eine logische Verknüpfung innerhalb der geräteseitigen Steuereinheit (21) einen Steuerbefehl als Ausgangssignal (X1,X2,X3) für wenigstens einen Aktor (22) auslöst, welcher die Rechkreisel (2) von einer bodennahen Arbeitsstellung (18) in eine bodenferne Vorgewendestellung (19) oder Transportstellung (20) überführt.

2. Heuwerbungsmaschine nach Anspruch 1, **dadurch gekennzeichnet, dass** die geräteseitige Steuereinheit (21) einen Mikroprozessor (23) aufweist.

3. Heuwerbungsmaschine nach Anspruch 2, **dadurch gekennzeichnet, dass** die geräteseitige Steuereinheit (21) ein Jobrechner (24) ist.

4. Heuwerbungsmaschine nach Anspruch 2 oder 3, **dadurch gekennzeichnet, dass** die geräteseitige Steuereinheit (21) einen Datenbus (25) aufweist.

5. Heuwerbungsmaschine nach Anspruch 4, **dadurch gekennzeichnet, dass** die geräteseitige Steuereinheit (21) mit dem traktorenseitigen Steuerungssystem (26) korrespondiert.

6. Heuwerbungsmaschine nach Anspruch 1, **dadurch gekennzeichnet, dass** wenigstens ein Aktor (22) als hydraulisches Wegeventil (27) ausgebildet ist.

7. Heuwerbungsmaschine nach Anspruch 1 und 5, **dadurch gekennzeichnet, dass** durch den Start der Rückwärtsfahrt (R) vom traktorenseitigen Steuerungssystem (26) ein Ausgangssignal (X7) generiert wird, welches als Eingangssignal (Y3) für die geräteseitige Steuereinheit (21) genutzt wird und wodurch das Ausgangsignal (X1,X2,X3) zur Ansteuerung des Aktors (22) erzeugt wird.

8. Heuwerbungsmaschine nach Anspruch 1, **dadurch gekennzeichnet, dass** die Heuwerbungsmaschine (1) wenigstens einen Fahrtrichtungssensor (28) aufweist, welcher abhängig von der Fahrtrichtung Vorwärts- (V) oder Rückwärtsfahrt (R) unterschiedliche Ausgangssignale (X1,X2) als Eingangssignale (Y1,Y2) für die geräteseitige Steuereinheit (21) generiert.

9. Heuwerbungsmaschine nach Anspruch 8, **dadurch gekennzeichnet, dass** der wenigstens eine Fahrtrichtungssensor (28) drehrichtungsabhängig vom Stützrad (6) des Fahrgestells (5) unterschiedliche Ausgangssignale (X1,X2) generiert.

10. Heuwerbungsmaschine nach Anspruch 8, **dadurch gekennzeichnet, dass** der Fahrtrichtungssensor (28) wenigstens zwei Initiatoren (29,30) umfasst, die zeitlich versetzt zueinander Eingangssignale (Y1,Y2) für die geräteseitige Steuereinheit (21) generieren.

11. Heuwerbungsmaschine nach Anspruch 8, **dadurch gekennzeichnet, dass** die unterschiedlichen Eingangssignale (Y1,Y2) genutzt werden, um damit für die geräteseitige Steuereinheit (21) unterschiedliche Betriebsmodi für die Vorwärtsfahrt (V) oder die Rückwärtsfahrt (R) zu definieren.

12. Heuwerbungsmaschine nach Anspruch 11, **dadurch gekennzeichnet, dass** das generierte Eingangssignal (Y1,Y2) zur Erkennung der Rückwärtsfahrt (R) die Steuereinheit in den Betriebsmodus Rückwärtsfahrt überführt.

13. Heuwerbungsmaschine nach Anspruch 11, **dadurch gekennzeichnet, dass** der Betriebsmodus Rückwärtsfahrt (R) die Rechkreisel (2) in eine verriegelte Selbsthaltung als bodenferne Vorgewendestellung (19) oder Transportstellung (20) überführt.

14. Heuwerbungsmaschine nach Anspruch 13, **dadurch gekennzeichnet, dass** der Betriebsmodus Rückwärtsfahrt (R) durch ein vom Fahrer des Traktors (8) manuell ausgelöstes Signal (3) vom Führerstand des Traktors aus aufgehoben werden kann, wodurch die geräteseitige Steuereinheit (21) in den Betriebsmodus Vorwärtsfahrt (V) zurückgesetzt wird.

15. Heuwerbungsmaschine nach Anspruch 13, **dadurch gekennzeichnet, dass** der Betriebsmodus Rückwärtsfahrt (R) durch die eingeleitete Vorwärtsfahrt (V) gekoppelt mit der Generierung des Eingangssignals (Y1,Y2) vom Fahrtrichtungssensor (28) automatisch in den Betriebsmodus Vorwärtsfahrt (V) zurückgesetzt wird.

## Claims

1. A hay-making machine (1) comprising at least two raking rotors (2) which are driven in rotation about perpendicular rotor axes (14) and which accommodate raking tines (16) having tine arms (15), wherein the raking rotors (2) can be supported on the ground in their working position (18) with ground-sensing and support wheels (17), wherein the raking rotors (2) are pivotably mounted to a machine frame (3) by means of cantilever arms (9) about approximately horizontally extending axes of folding hinges (10) at same, and can be transferred by means of hydraulic control drives (12, 13) from a working position (18) near the ground into a headland position (19) or transport position (20) further from the ground and vice-versa, wherein the machine frame (3) has a chassis (5) having at least two support wheels (6), **characterised in that** the hay-making machine (1) has an implement-side control unit (21) which by way of an input channel (37) can receive and process an input signal (Y1, Y2, Y3) generated in dependent relationship on the reverse travel (5) of the tractor (8) and/or the hay-making machine (1), wherein the input signal (Y1, Y2, Y3) by way of a logic link within the implement-side control unit (21) triggers a control command as an output signal (X1, X2, X3) for at least one actuator (22) which transfers the raking rotors (2) from a working position (18) near the ground into a headland position (19) or transport position (20) away from the ground.

2. A hay-making machine according to claim 1 **characterised in that** the implement-side control unit (21) has a microprocessor (23).

3. A hay-making machine according to claim 2 **characterised in that** the implement-side control unit (21) has a job computer (24).

4. A hay-making machine according to claim 2 or claim 3 **characterised in that** the implement-side control unit (21) has a databus (25).

5. A hay-making machine according to claim 4 **characterised in that** the implement-side control unit (21) corresponds with the tractor-side control system (26).

6. A hay-making machine according to claim 1 **characterised in that** at least one actuator (22) is in the form of a hydraulic directional control valve (27).

7. A hay-making machine according to claim 1 and claim 5 **characterised in that** an output signal (X7) is generated by the starting of the reverse travel (R) by the tractor-side control system (26), which output signal is used as an input signal (Y3) for the implement-side control unit (21) and whereby the output signal (X1, X2, X3) is produced for actuating the actuator (22).

8. A hay-making machine according to claim 1 **characterised in that** the hay-making machine (1) has at least one travel direction sensor (28) which in dependence on the travel direction forwards (V) or reverse (R) generates different output signals (X1, X2) as input signals (Y1, Y2) for the implement-side control unit (21).

9. A hay-making machine according to claim 8 **characterised in that** the at least one travel direction sensor (28) generates different output signals (X1, X2) in dependence on the direction of rotation of the support wheel (6) of the chassis (5).

10. A hay-making machine according to claim 8 **characterised in that** the travel direction sensor (28) includes at least two initiators (29, 30) which in time-shifted relationship with each other generate input signals (Y1, Y2) for the implement-side control unit (21).

11. A hay-making machine according to claim 8 **characterised in that** the different input signals (Y1, Y2) are used in order to define therewith for the implement-side control unit (21) different operating modes for the forward travel (V) or reverse travel (R).

12. A hay-making machine according to claim 11 **characterised in that** the generated input signal (Y1, Y2) for detection of the reverse travel (R) transfers the control unit into the reverse travel operating mode.

13. A hay-making machine according to claim 11 **characterised in that** the reverse travel (R) operating mode transfers the raking rotors (2) into a locked self-holding configuration as the headland position (19) or transport position (20) away from the ground.

14. A hay-making machine according to claim 13 **characterised in that** the reverse travel (R) operating mode can be nullified by a signal (3) triggered manually by the driver of the tractor (8) from the tractor driving position whereby the implement-side control unit (21) is reset to the forward (V) operating mode.

15. A hay-making machine according to claim 13 **characterised in that** the reverse travel (R) operating mode is automatically reset by the initiated forward travel (V) coupled to the generation of the input signal (Y1, Y2) by the travel direction sensor (28) into the forward travel (V) operating mode.

## Revendications

1. Machine de fenaison (1) comprenant au moins deux rotors de râtelage (2) qui sont entraînés en rotation autour d'axes de rotors (14) et qui sont garnis de dents de râtelage (16) comportant des bras porte-dents (15), les rotors de râtelage (2) pouvant, dans leur position de travail (18), prendre appui sur le sol par l'intermédiaire de roues de palpage et d'appui (17), les rotors de râtelage (2) étant articulés sur un bâti de machine (3) au moyen de bras (9) autour d'axes sensiblement horizontaux d'articulations de repliage (10) sur lesquels ils sont articulés, et pouvant être transférés, au moyen d'actionneurs de positionnement hydrauliques (12, 13), depuis une position de travail (18) proche du sol vers une position en tournière (19) ou une position de transport (20) plus éloignée du sol, le bâti de machine (3) comportant un châssis (5) avec au moins deux roues d'appui (6), **caractérisée en ce que** la machine de fenaison (1) comporte, côté outil, une unité de commande (21) qui, par l'intermédiaire d'un canal d'entrée (37), peut recevoir et traiter un signal d'entrée (Y1, Y2, Y3) généré en fonction de la marche arrière (R) du tracteur (8) et/ou de la machine de fenaison (1), le signal d'entrée (Y1, Y2, Y3) déclenchant, par l'intermédiaire d'une fonction logique, à l'intérieur de l'unité de commande (21) côté outil, une instruction de commande en tant que signal de sortie (X1, X2, X3) pour au moins un actionneur (22), lequel transfère les rotors de râtelage (2) depuis une position de travail (18) proche du sol vers une position en tournière (19) ou une position de transport (20) éloignée du sol.

2. Machine de fenaison selon la revendication 1, **caractérisée en ce que** l'unité de commande (21) côté outil comporte un microprocesseur (23).

3. Machine de fenaison selon la revendication 2, **caractérisée en ce que** l'unité de commande (21) côté outil est un calculateur de tâches (24).

4. Machine de fenaison selon la revendication 2 ou 3, **caractérisée en ce que** l'unité de commande (21) côté outil comporte un bus de données (25).

5. Machine de fenaison selon la revendication 4, **caractérisée en ce que** l'unité de commande (21) côté outil correspond avec le système de commande (26) côté tracteur.

6. Machine de fenaison selon la revendication 1, **caractérisée en ce qu'**au moins un actionneur (22) est conformé en valve directionnelle hydraulique (27).

7. Machine de fenaison selon la revendication 1 et 5, **caractérisée en ce que**, par suite de l'enclenchement de la marche arrière (R), un signal de sortie (X7) est généré par le système de commande (26) côté tracteur et est utilisé comme signal d'entrée (Y3) pour l'unité de commande (21) côté outil, ce qui a pour effet de produire le signal de sortie (X1, X2, X3) pour commander l'actionneur (22).

8. Machine de fenaison selon la revendication 1, **caractérisée en ce que** la machine de fenaison (1) comporte au moins un capteur de sens de marche (28) qui, en fonction du sens de marche avant (V) ou arrière (R), génère des signaux de sortie différents (X1, X2) en tant que signaux d'entrée (Y1, Y2) pour l'unité de commande (21) côté outil.

9. Machine de fenaison selon la revendication 8, **caractérisée en ce que** le au moins un capteur de sens de marche (28) génère des signaux de sortie (X1, X2) différents en fonction du sens de rotation de la roue d'appui (6) du châssis (5).

10. Machine de fenaison selon la revendication 8, **caractérisée en ce que** le capteur de sens de marche (28) comprend au moins deux initiateurs (29, 30) qui génèrent pour l'unité de commande (21) côté outil des signaux d'entrée (Y1, Y2) décalés temporellement l'un par rapport à l'autre.

11. Machine de fenaison selon la revendication 8, **caractérisée en ce que** les signaux d'entrée différents (Y1, Y2) sont utilisés afin de définir, pour l'unité de commande (21) côté outil, des modes de fonctionnement différents pour la marche avant (V) ou la marche arrière (R).

12. Machine de fenaison selon la revendication 11, **caractérisée en ce que**, pour détecter la marche arrière (R), le signal d'entrée généré (Y1, Y2) transfère l'unité de commande en mode de fonctionnement Marche arrière.

13. Machine de fenaison selon la revendication 11, **caractérisée en ce que** le mode de fonctionnement Marche arrière (R) transfère les rotors de râtelage (2) dans un auto-maintien verrouillé faisant fonction de position en tournière (19) ou de position de transport (20) éloignée du sol.

14. Machine de fenaison selon la revendication 13, **caractérisée en ce que** le mode de fonctionnement Marche arrière (R) peut être annulé à partir du poste de conduite par l'intermédiaire d'un signal (3) déclenché manuellement par le conducteur du tracteur (8), ce qui a pour effet de ramener l'unité de commande (21) côté outil en mode de fonctionnement Marche avant (V).

15. Machine de fenaison selon la revendication 13, **caractérisée en ce que** le mode de fonctionnement Marche arrière (R) est ramené automatiquement en mode de fonctionnement Marche avant (V) par l'enclenchement de la marche avant (V) couplé avec la génération du signal d'entrée (Y1, Y2) par le capteur de sens de marche (28).
